**Europäisches Patentamt**

**European Patent Office**

**Office européen des brevets**

(19)

(11) Veröffentlichungsnummer: **0 391 215**

**A2**

(12) # EUROPÄISCHE PATENTANMELDUNG

(21) Anmeldenummer: **90105815.6**

(22) Anmeldetag: **27.03.90**

(51) Int. Cl.⁵: **F16H 3/54**

(30) Priorität: **03.04.89 US 331914**

(43) Veröffentlichungstag der Anmeldung:
**10.10.90 Patentblatt 90/41**

(84) Benannte Vertragsstaaten:
**BE DE DK ES FR GB IT SE**

(71) Anmelder: **DEERE & COMPANY**
**1 John Deere Road**
**Moline, Illinois 61265(US)**

(72) Erfinder: **Jeffries, Dennis Lee**
**9842 Dysart Road**
**Waterloo, Iowa(US)**

(74) Vertreter: **Feldmann, Bernhard et al**
**DEERE & COMPANY European Office Patent**
**Department Steubenstrasse 36-42**
**D-6800 Mannheim 1(DE)**

(54) **Planetengetriebe.**

(57) Ein Planetengetriebe mit wenigstens einem Sonnenrad (20), einem Ringrad (18) und einem Planetenradträger (14), wobei der Planetenradträger (14) wenigstens ein Planetenrad (16) trägt, welches mit dem Sonnenrad (20) und dem Ringrad (18) in Eingriff steht, besitzt eine Bremse, durch die das Sonnenrad (20), das Ringrad (18) oder der Planetenträger (14) gegenüber dem Getriebegehäuse (30) festsetzbar ist, und eine Kupplung, durch die jeweils zwei der Komponenten Sonnenrad (20), Ringrad (18) und Planetenradträger (14) miteinander drehfest kuppelbar sind. Die Bremse und die Kupplung werden durch einen hydraulischen Kolben (52), der gegen die Kraft einer Feder (44) wirkt und wahlweise entweder die Bremse oder die Kupplung in Eingriff bringt, betätigt. Drehfest mit dem Sonnenrad (20), dem Ringrad (18) oder dem Planetenradträger (14) ist ein Fortsatz (24) verbunden, welcher einen ringförmigen Spalt (26) aufweist. Der Spalt (26) nimmt wenigstens teilweise eine ringförmige Scheibe (36) auf, die mit dem Kolben (52) und der Feder (44) in Verbindung steht und sich durch die Federkraft auf eine Seite des Spaltes (26) und durch die Kolbenkraft auf die andere Seite des Spaltes (26) verschieben läßt. Die Scheibe (36) bringt in ihrer einen Seitenlage die Kupplung und in ihrer anderen Seitenlage die Bremse in Eingriff.

## Planetengetriebe

Die Erfindung betrifft ein Planetengetriebe mit wenigstens einem Sonnenrad, einem Ringrad und einem Planetenradträger, wobei der Planetenradträger wenigstens ein Planetenrad trägt, welches mit dem Sonnenrad und dem Ringrad in Eingriff steht, sowie mit einer Bremse, durch die das Sonnenrad, das Ringrad oder der Planetenträger gegenüber dem Getriebegehäuse festsetzbar ist, und einer Kupplung, durch die jeweils zwei der Elemente Sonnenrad, Ringrad und Planetenradträger miteinander drehfest kuppelbar sind, sowie mit einem hydraulisch betätigbaren Kolben, der gegen die Kraft einer Feder wirkt und wahlweise entweder die Bremse oder die Kupplung in Eingriff bringt.

Normalerweise weist ein Planetengetriebe ein Sonnenrad, ein Ringrad und einen Planetenradträger auf, wobei letzterer mehrere drehbare Planetenräder trägt. Die Planetenräder stehen mit dem Ringrad und dem Sonnenrad in Eingriff. Es ist bekannt, je nach erforderlicher Übertragungscharakteristik, mit dem Getriebeeingang und dem Getriebeausgang verschiedene Kombinationen von Sonnenrad, Planetenradträger oder Ringrad zu verbinden. Üblicherweise wird ein unterschiedliches Übertragungsverhältnis durch Verwendung einer Kupplung und/oder einer Bremse eingestellt. Durch die Kupplung lassen sich Paare aus Sonnenrad, Planetenradträger oder Ringrad gegen eine relative Verdrehung gegeneinander festsetzen. Die Bremse ist in der Lage, das Sonnenrad, den Planetenradträger oder das Ringrad gegenüber dem Getriebegehäuse festzusetzen und an einer Verdrehung zu hindern.

Werden in einem Planetengetriebe sowohl eine Kupplung als auch eine Bremse verwendet, so sind in der Regel ein federvorgespannter Hydraulikzylinder zur Beeinflussung der Bremse und ein weiterer federvorgespannter Hydraulikzylinder zur Beeinflussung der Kupplung vorgesehen. In Abhängigkeit von der gewünschten Charakteristik können die Kolben entweder so vorgespannt werden, daß durch die Vorspannung die jeweiligen Komponenten miteinander verbunden werden und sich bei Anlegen eines Hydraulikdruckes lösen, oder umgekehrt.

Bei vielen Anwendungen sollen die Kupplung und die Bremse nicht gleichzeitig eingreifen. Dies bedeutet, daß die zeitliche Anlegung des Hydraulikdruckes an die Kolben genau aufeinander abgestimmt sein muß. Zur Ermöglichung einer genauen Steuerung der Kolben erfordert der Steuerventilaufbau des Hydrauliksystems eine sorgfältige Konstruktion und Herstellung.

Durch die US-PS 4,706,520 ist ein Planetengetriebe der eingangs genannten Art bekannt geworden. Bei diesem Planetengetriebe steht mit dem Sonnerad ein durch einen Hydraulikkolben verschiebbarer Kupplungskonus in Verbindung, durch den, je nach dessen Lage, das Sonnenrad entweder gegenüber dem Getriebegehäuse festlegbar oder drehfest mit dem Ringrad verbindbar sein soll. Die Kolbenkraft wird nahe der Achse in eine längs eines Sonnenradansatzes verschiebbare Trommel, die an ihrem äußeren Umfang den Kupplungskonus trägt, eingeleitet. Daher wirkt die Kolbenkraft nicht unmittelbar, sondern nur mit einem kleinen Anteil senkrecht auf die Reiboberflächen des Kupplungskonusses.

Die mit der Erfindung zu lösende Aufgabe wird darin gesehen, ein Planetengetriebe der eingangs genannten Art bereitzustellen, bei dem zur gleichen Zeit nur entweder die Kupplung oder die Bremse betätigbar ist, das keine besonderen Anforderungen an die Konstruktion und Herstellung stellt, das durch einfache Steuerventile betätigbar ist und bei dem die Verwendung konischer Kupplungs- und Bremsflächen vermieden wird.

Die Aufgabe wird für ein Planetengetriebe der eingangs genannten Art erfindungsgemäß durch die kennzeichnenden Merkmale des Patentanspruches 1 gelöst. Danach ist mit dem Sonnenrad, dem Ringrad oder dem Planetenradträger ein Fortsatz drehfest verbunden, welcher einen ringförmigen Spalt aufweist. Der sich im wesentlichen radial erstreckende Spalt nimmt wenigstens teilweise eine ringförmige Scheibe auf, die mit dem Kolben und der Feder in Verbindung steht und sich durch die Federkraft auf eine Seite des Spaltes und durch die Kolbenkraft auf die andere Seite des Spaltes axial verschieben läßt. Die Scheibe ist in ihrer einen Seitenlage mit der Kupplung und in ihrer anderen Seitenlage mit der Bremse in Eingriff bringbar.

Ein derartiges Planetengetriebe hat den Vorteil, daß der durch die Feder bzw. den Hydraulikkolben aufgebrachte Druck senkrecht auf die Eingriffsflächen der Bremse bzw. der Kupplung wirkt. Daher können die Eingriffsflächen relativ klein ausgebildet werden und/oder es reicht zur Betätigung ein geringerer Druck aus.

Sowohl die Bremse als auch die Kupplung können durch ein einziges Steuerventil betätigt werden, da die Scheibe entweder von der Federkraft in die eine Richtung oder durch die in der Hydraulikkammer erzeugte, gegen die Federkraft wirkende Hydraulikkraft in die andere Richtung gedrückt wird. Welche Verbindung der Planetengetriebekomponenten durch die Federkraft bzw. durch die Hydraulikkraft miteinander verbunden werden, hängt von den Verhältnissen des Einzelfalles ab.

Entsprechend einer bevorzugten Ausgestaltung der Erfindung ist zwischen der Scheibe und einer Seitenwandung des Spaltes, die eine Kupplungsfläche trägt, die Kupplung und zwischen der Scheibe und der anderen Seitenwandung des Spaltes, die eine Bremsfläche trägt, die Bremse angeordnet.

Vorzugsweise ist das Hydrauliksystem in den Fortsatz integriert und derart ausgebildet, daß in eine Hälfte des Fortsatzes ein zum Spalt offener Hohlraum eingelassen ist, in dem der Kolben axial verschiebbar ist, und daß zwischen Hohlraum und Kolben eine Hydraulikkammer ausgebildet ist, die über ein Steuerventil mit einem Hydraulikdrucksystem in Verbindung steht. Zweckmäßigerweise handelt es sich um einen Ringkolben, dessen mittlerer Durchmesser in etwa gleich dem mittleren Durchmesser der Kupplungsfläche ist. Damit wirkt die Hydraulikkraft unmittelbar und senkrecht auf die Kupplungsfläche.

Die Feder ist zweckmäßigerweise zwischen der Scheibe und der dem Kolben gegenüberliegenden Seite des Fortsatzes eingespannt und drückt die Scheibe gegen den Kolben. Sie ist vorzugsweise eine ringförmige Tellerfeder, die kreisringartig den Fortsatz umgibt. Der Tellerfederdurchmesser entspricht in etwa dem Durchmesser der Bremsfläche, so daß ihre radial ausgerichtete Kraft unmittelbar und senkrecht auf die Bremsfläche wirkt.

Um ein Verdrehen der Scheibe relativ zu dem ringförmig ausgebildeten Kolben zu verhindern, sind Anschlagmittel vorgesehen. Diese werden vorzugsweise dadurch gebildet, daß der ringförmige Kolben wenigstens einen Vorsprung trägt, der in eine entsprechende Öffnung in der Scheibe eingreift.

Um auch ein Verdrehen der Scheibe relativ zu dem Fortsatz zu unterbinden, schlägt eine bevorzugte Weiterbildung der Erfindung weitere Anschlagmittel vor. Diese bestehen zweckmäßigerweise darin, daß die Scheibe wenigstens eine Ausnehmung aufweist, in die wenigstens ein mit dem Fortsatz verbundener Ansatz eingreift.

Vorzugsweise weist der Fortsatz eine der Scheibe zugewandte Schulter auf, und eine als Tellerfeder ausgebildete Feder ist zwischen der Schulter und der Scheibe eingespannt.

Einer weiteren Ausgestaltung der Erfindung zufolge stehen eine erste Antriebswelle mit dem Planetenradträger und eine zweite Antriebswelle mit dem Ringrad in Verbindung. Das Sonnenrad ist mit einem koaxial zu diesem ausgerichteten Fortsatz verbunden, und wenigstens ein Bremsbelag ist am Getriebegehäuse und wenigstens ein Kupplungsbelag an dem Planetenradträger befestigt.

Vorzugsweise trägt das Planetenrad zwei Verzahnungen, von denen die eine mit dem Sonnenrad und die andere mit dem Ringrad in Eingriff steht.

Weitere vorteilhafte Ausgestaltungen und Weiterbildungen der Erfindung gehen aus den Unteransprüchen hervor.

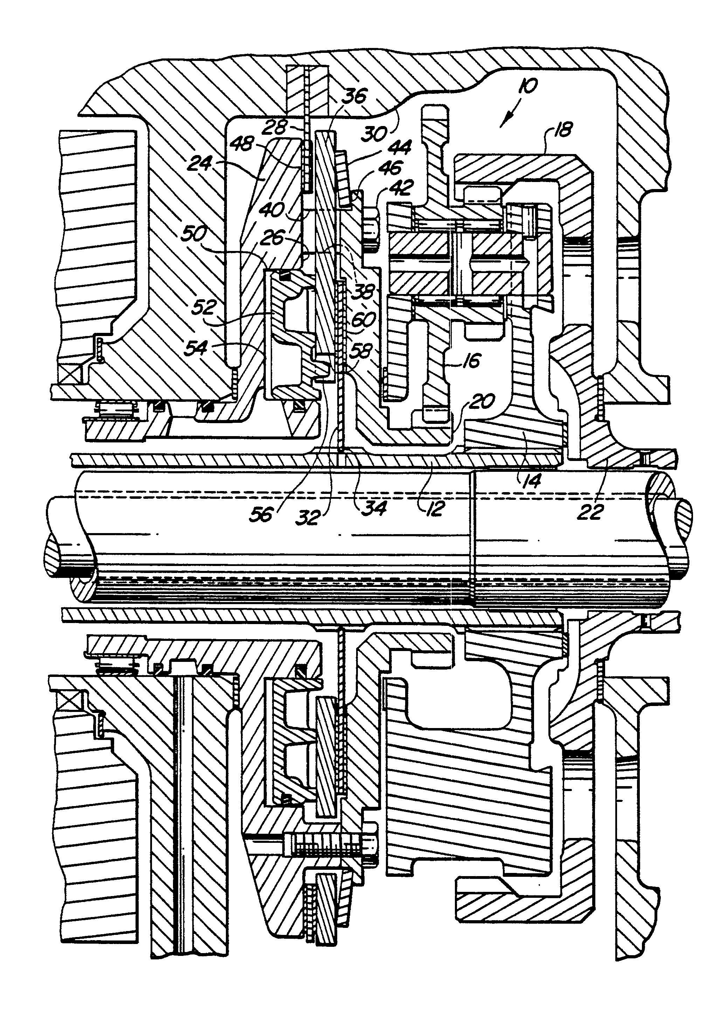

Anhand der Zeichnung, die ein bevorzugtes Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Die einzige Figur zeigt ein Planetengetriebe, für welches gemäß der vorliegenden Erfindung nur ein Hydraulikkolben erforderlich ist.

Das Planetengetriebe 10 wird über eine Eingangswelle 12, welche mit dem Planetenradträger 14 in Verbindung steht, angetrieben. Am Planetenradträger 14 sind mehrere Planetenräder 16, die als doppelte Zahnräder ausgebildet sind, drehbar befestigt. Die Planetenräder 16 stehen in üblicher Weise mit dem Ringrad 18 und dem Sonnenrad 20 in Eingriff. Die Kraft wird über eine Ausgangswelle 22 abgegeben, die mit dem Ringrad 18 (äußeres Hohlrad) in Verbindung steht.

Das Sonnenrad 20 hat einen sich im wesentlichen axial erstreckenden Sonnenradfortsatz 24, welcher einen ringförmigen Spalt 26 aufweist. Ein am Getriebegehäuse 30 befestigter Bremsbelagträger 28 erstreckt sich in den radial außenliegenden Bereich des rigförmigen Spaltes 26. Auf ähnliche Weise erstreckt sich eine Kupplungsscheibe 32, welche über eine Verkeilung 34 drehfest mit der Eingangswelle 12 in Verbindung steht, in den ringförmigen Spalt 26. In dem ringförmigen Spalt 26 ist zwischen dem Bremsbelagträger 28 und der Kupplungsscheibe 32 eine sich im wesentlichen radial erstreckende ringförmige Scheibe 36 angeordnet. Die ringförmige Scheibe 36 weist wenigstens eine Ausnehmung 38 auf, durch die sich ein Teilstück 40 des Sonnenradfortsatzes 24 erstreckt, so daß größere relative Verdrehungen zwischen der ringförmigen Scheibe 36 und dem Sonnenradfortsatz 24 verhindert werden. Der Sonnenradfortsatz 24 besteht gewöhnlich aus zwei Teilen, die beidseits der ringförmigen Scheibe 36 angeordnet und durch Schrauben 42 oder dergleichen zusammengehalten werden können.

Zwischen die ringförmige Scheibe 36 und eine Schulter 46 in dem Sonnenradfortsatz 24 ist eine Feder 44, beispielsweise eine ringförmige Tellerfeder, eingespannt, die die Scheibe 36 axial in Richtung Bremsbelagträger 28 drückt. Hierdurch wird auch der Bremsbelagträger 28 gegen eine Bremsangriffsfläche 48 auf dem Sonnenradfortsatz gedrückt, wodurch eine Verdrehung des Sonnenrades 20 relativ zum Getriebegehäuse 30 verhindert wird. Der Durchmesser der Tellerfeder 44 entspricht etwa dem mittleren Durchmesser des Bremsbelages, so daß die radial wirkende Tellerfederkraft unmittelbar und senkrecht auf den Bremsbelag wirkt.

In dem Sonnenradfortsatz 24 befindet sich auf der Seite des ringförmigen Spaltes 26, der axial der Feder 44 gegenüberliegt, ein Kolbenringraum 50, in dem gleitbar ein ringförmiger Kolben 52 angeordnet ist. Zwischen dem Kolbenringraum 50 und dem Kolben 52 ist eine Hydraulikkammer 54 ausgebildet. Die Hydraulikkammer 54 kann mit Hydraulikflüssigkeit unter Druck gesetzt oder entlastet werden (was hier nicht näher beschrieben wird, weil es für den Fachmann keine Schwierigkeit darstellt). Durch den Hydraulikdruck läßt sich der Kolben 52 in Richtung der ringförmigen Scheibe 36 verschieben. Bei Druckentlastung wird der Kolben 52 durch die Kraft der Feder 44 weiter in den Kolbenringraum 50 hinein geschoben. Der Kolbendurchmesser entspricht in etwa dem Durchmesser der Kupplungsscheibe, so daß die radial wirkende Kolbenkraft unmittelbar und senkrecht auf den Bremsbelag wirkt.

Der Kolben 52 enthält wenigstens eine Nase 56, welche sich in eine entsprechende Öffnung 58 in der ringförmigen Scheibe 36 erstreckt, wodurch eine Verdrehung zwischen beiden weitgehend verhindert wird.

Wird der Kolben 52 durch Lieferung eines Hydraulikdruckes an die Hydraulikkammer 54 betätigt, so bewegt sich die ringförmige Scheibe 36 axial von dem Bremsbelagträger 28 weg in Richtung Kupplungsscheibe 32. Hierdurch wird gleichzeitig der Eingriff des Bremsbelagträgers 28 mit der Bremsangriffsfläche 48 gelöst und die Kupplungsscheibe 32 mit der Kupplungsangriffsfläche 60 auf dem Sonnenradfortsatz 24 in Eingriff gebracht, wodurch sich nunmehr das Sonnenrad 20 mit dem Planetenradträger 14 mitdreht.

Die übrigen Elemente des Planetengetriebes, die in der Zeichnung dargestellt sind, wie beispielsweise Dichtungen, Schmiersysteme und dergleichen, sind dem Fachmann geläufig und werden daher hier nicht näher beschrieben.

Auch wenn die Erfindung lediglich anhand eines Ausführungsbeispieles beschrieben wurde, erschließen sich für den Fachmann im Lichte der vorstehenden Beschreibung viele verschiedenartige Alternativen, Modifikationen und Varianten, die unter die vorliegende Erfindung fallen. Gemäß der Zeichnung ist zwar der Eingang mit dem Planetenradträger und der Ausgang mit dem Ringrad verbunden, und die Drehung des Sonnenrades relativ zum Getriebegehäuse wird durch eine Bremse und eine Kupplung eingestellt. Für den Fachmann liegen jedoch eine Reihe anderer Verknüpfungen auf der Hand. Ferner können bei entsprechender Ausbildung die Merkmale, denen zufolge die Bremse durch Federkraft in Eingriff gebracht und die Kupplung durch Hydraulikdruck betätigt wird, auch umgekehrt werden.

## Ansprüche

1. Planetengetriebe mit wenigstens einem Sonnenrad (20), einem Ringrad (18) und einem Planetenradträger (14), wobei der Planetenradträger (14) wenigstens ein Planetenrad (16) trägt, welches mit dem Sonnenrad (20) und dem Ringrad (18) in Eingriff steht, sowie mit einer Bremse, durch die das Sonnenrad (20), das Ringrad (18) oder der Planetenträger (14) gegenüber dem Getriebegehäuse (30) festsetzbar ist, und einer Kupplung, durch die jeweils zwei der Elemente Sonnenrad (20), Ringrad (18) und Planetenradträger (14) miteinander drehfest kuppelbar sind, sowie mit einem hydraulisch betätigbaren Kolben (52), der gegen die Kraft einer Feder (44) wirkt und wahlweise entweder die Bremse oder die Kupplung in Eingriff bringt, dadurch gekennzeichnet, daß drehfest mit dem Sonnenrad (20), dem Ringrad (18) oder dem Planetenradträger (14) ein Fortsatz (24), welcher einen ringförmigen Spalt (26) aufweist, verbunden ist, daß der Spalt (26) wenigstens teilweise eine ringförmige Scheibe (36) aufnimmt, die mit dem Kolben (52) und der Feder (44) in Verbindung steht und sich durch die Federkraft auf eine Seite des Spaltes (26) und durch die Kolbenkraft auf die andere Seite des Spaltes (26) verschieben läßt, und daß die Scheibe (36) in ihrer einen Seitenlage die Kupplung und in ihrer anderen Seitenlage die Bremse in Eingriff bringt.

2. Planetengetriebe nach Anspruch 1, dadurch gekennzeichnet, daß zwischen der Scheibe (36) und einer Seitenwandung des Spaltes (26), die eine Kupplungsfläche (60) trägt, die Kupplung und zwischen der Scheibe (36) und der anderen Seitenwandung des Spaltes (26), die eine Bremsfläche (48) trägt, die Bremse angeordnet ist.

3. Planetengetriebe nach Anspruch 1 oder 2, dadurch gekennzeichnet, daß in eine Seitenwandung des Spaltes (26) in den Fortsatz (24) ein Hohlraum (50) eingelassen ist, in dem sich der Kolben (52) befindet, und daß zwischen Hohlraum (50) und Kolben (52) eine Hydraulikkammer (54) ausgebildet ist.

4. Planetengetriebe nach Anspruch 3, dadurch gekennzeichnet, daß die Feder (44) zwischen der Scheibe (36) und der dem Kolben (52) gegenüberliegenden Seite des Fortsatzes (24) eingespannt ist.

5. Planetengetriebe nach einem der Ansprüche 1 bis 4, dadurch gekennzeichnet, daß die Feder eine ringförmige Tellerfeder (44) ist, die kreisringartig den Fortsatz (24) umgibt.

6. Planetengetriebe nach einem der Ansprüche 1 bis 5, dadurch gekennzeichnet, daß Anschlagmittel vorgesehen sind, die ein Verdrehen der Scheibe (36) relativ zu dem ringförmig ausgebildeten Kolben (52) verhindern.

7. Planetengetriebe nach Anspruch 6, dadurch gekennzeichnet, daß der ringförmige Kolben (52) wenigstens einen Vorsprung (56) trägt, der in eine entsprechende Öffnung (58) in der Scheibe (36) eingreift.

8. Planetengetriebe nach einem der Ansprüche 1 bis 7, dadurch gekennzeichnet, daß Anschlagmittel vorgesehen sind, die ein Verdrehen der Scheibe (36) relativ zu dem Fortsatz (24) verhindern.

9. Planetengetriebe nach Anspruch 8, dadurch gekennzeichnet, daß die Scheibe (36) wenigstens eine Ausnehmung (38) aufweist, in die wenigstens ein mit dem Fortsatz (24) verbundener Ansatz (40) eingreift.

10. Planetengetriebe nach einem der Ansprüche 1 bis 9, dadurch gekennzeichnet, daß der Fortsatz (24) eine der Scheibe (36) zugewandte Schulter (46) aufweist und eine als Tellerfeder (44) ausgebildete Feder zwischen der Schulter (46) und der Scheibe (36) eingespannt ist.

11. Planetengetriebe nach einem der Ansprüche 1 bis 10, dadurch gekennzeichnet, daß eine erste Antriebswelle (12) mit dem Planetenradträger (14) und eine zweite Antriebswelle (22) mit dem Ringrad (18) in Verbindung stehen, daß das Sonnenrad mit einem koaxial zu diesem ausgerichteten Fortsatz (24) verbunden ist, und daß wenigstens ein Bremsbelag am Getriebegehäuse (10) und wenigstens ein Kupplungsbelag an dem Planetenradträger (14) befestigt ist.

12. Planetengetriebe nach einem der Ansprüche 1 bis 11, dadurch gekennzeichnet, daß das Planetenrad (16) zwei Verzahnungen trägt, von denen die eine mit dem Sonnenrad (20) und die andere mit dem Ringrad (18) in Eingriff steht.